Europäisches Patentamt

European Patent Office

Office européen des brevets

(19)

(11) **EP 0 664 602 B1**

(12) **EUROPÄISCHE PATENTSCHRIFT**

(45) Veröffentlichungstag und Bekanntmachung des Hinweises auf die Patenterteilung:
**17.12.1997  Patentblatt 1997/51**

(51) Int Cl.6: **H02M 3/335**

(21) Anmeldenummer: **94100822.9**

(22) Anmeldetag: **20.01.1994**

(54) **Sperrumrichter mit geregelter Ausgangsspannung**

Flyback converter with regulated output voltage

Convertisseur à récupération avec tension de sortie régulée

(84) Benannte Vertragsstaaten:
**AT BE CH DE DK ES FR GB IT LI PT SE**

(43) Veröffentlichungstag der Anmeldung:
**26.07.1995  Patentblatt 1995/30**

(73) Patentinhaber: **SIEMENS AKTIENGESELLSCHAFT**
**80333 München (DE)**

(72) Erfinder: **Preis, Josef, Dipl.-Ing.**
**D-81245 München (DE)**

(56) Entgegenhaltungen:
EP-A- 0 420 074          DE-A- 3 627 858
DE-A- 4 021 385

- **PATENT ABSTRACTS OF JAPAN, vol. 13, no. 117 (E-731), 22. März 1989 & JP-A-63 287 364 (HITACHI), 24. November 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf einen wie im Oberbegriff des Patentanspruchs 1 angegebenen Sperrumrichter.

Ein derartiger Sperrumrichter ist bereits aus dem Buch von Joachim Wüstehube: "Schaltnetzteile: Grundlagen, Entwurf, Schaltungsbeispiele", expert-verlag 1979, Seite 87 bis 91 bekannt.

Übliche Sperrumrichter haben einen Übertrager, der während der Einschaltzeit eines im primärseitigen Hauptstromkreis liegenden Leistungsschalters Energie aufnimmt und wenigstens während eines Teiles der Sperrphase des Leistungsschalters Energie an den sekundärseitigen Hauptstromkreis abgibt.

Die Ausgangsspannung des Sperrumrichters ist eine Gleichspannung, deren Größe ein Bruchteil der Amplitude der sekundärseitigen Impulsspannung ist. Der Stellbereich des Leistungsschalters wird häufig auf ein Tastverhältnis von 0,5 begrenzt.

Ferner sind aus dem Buch: "Motorola Linear and Interface Integrated Circuits", 2. Auflage, 1988, Seite 5-17 bis 5-24 bereits Referenzelemente bekannt, die als Regler Verwendung finden können. Derartige Referenzelemente weisen einen Bezugsspannungsanschluß, einen Istwerteingang und einen Stellspannungsausgang auf.

Man kann die Ausgangsspannung eines Sperrumrichters mit Hilfe einer Regelanordnung auf einen konstanten Wert regeln. Allerdings können sich dabei dann Schwierigkeiten ergeben, wenn mit Hilfe des Sperrumrichters eine vergleichsweise kleine Ausgangsspannung erzeugt werden soll. Reicht die vom Sperrumrichter abgegebene geregelte Ausgangsspannung nicht als Hilfsspannung für die Regelanordnung aus, so muß die benötigte Hilfsspannung zusätzlich zur geregelten Ausgangsspannung erzeugt werden.

Weist der Sperrumrichter an sich keinen geeigneten Ausgangskreis auf, so kann man eine solche Hilfsspannung mittels einer auf dem Übertragerkern zusätzlich angebrachten Wicklung erzeugen. Dies erfordert einen Übertrager mit erhöhtem Aufwand an Wicklungen sowie erhöhtem Bedarf an Wickelraum, was darüber hinaus auch zu thermischen Problemen beim Übertrager führen kann.

Eine Möglichkeit die Hilfsspannung von einer Sekundärwicklung zu erzeugen, zeigt die DE-A-4 021 385.

Eine andere Möglichkeit besteht darin, als Hilfsspannung eine Ausgangsspannung eines anderen vorhandenen Umrichters zu verwenden. Bei einer derartigen Kopplung zweier Umrichter können sich jedoch Schwierigkeiten hinsichtlich der Konstanz der Hilfsspannung im Strombegrenzungsfall des zusätzlichen Umrichters oder in der zeitlichen Abfolge des Hochlaufens von Hilfsspannung und Ausgangsspannung des Sperrumrichters ergeben.

Aufgabe der Erfindung ist es daher, einen Sperrumrichter mit geregelter Ausgangsspannung derart auszubilden, daß die Hilfsspannung mit geringem Aufwand am Sperrumrichter selbst erzeugt wird.

Überlegungen im Rahmen der Erfindung haben ergeben, daß bei einem Sperrumrichter an der Gleichrichterdiode des ausgangsseitigen Hauptstromkreises eine Rechteckspannung zur Verfügung steht, deren Amplitude bei üblicher Bemessung des Sperrumrichters etwa das Doppelte der geregelten Ausgangsgleichspannung beträgt und daß eine für eine Regelanordnung benötigte Hilfsspannung im Hinblick auf die vergleichsweise geringe Strombelastung der Hilfsspannungsquelle mit Hilfe einer Hilfsschaltung aus dieser Rechteckspannung gewonnen werden kann.

Gemäß der Erfindung wird der Sperrumrichter zur Lösung der gestellten Aufgabe in der im kennzeichnenden Teil des Patentanspruchs 1 angegebenen Weise ausgebildet. Dabei wird eine Hilfsspannung, die von einer im zu regelnden Ausgangskreis auftretenden Spannung abgeleitet wird, auf die geregelte Ausgangsspannung aufgestockt und so die gewünschte Versorgungsspannung als Summenspannung aus Ausgangsspannung und Hilfsspannung gewonnen.

Durch die erfindungsgemäßen Maßnahmen ergibt sich in vorteilhafter Weise ein Sperrumrichter, bei dem mit besonders geringem Aufwand und großer Zuverlässigkeit sowohl eine vergleichsweise kleine geregelte Ausgangsspannung für einen relativ großen Laststrom als auch eine demgegenüber größere Hilfsspannung für einen vergleichsweise kleinen Strombedarf erzeugt wird.

Vorteilhafte Ausgestaltungen der Erfindung gehen aus den abhängigen Ansprüchen 2 bis 7 hervor.

Die Erfindung wird anhand der in den Figuren dargestellten Ausführungsbeispiele näher erläutert.

Es zeigen

Fig. 1 einen Sperrumrichter mit einer einen Operationsverstärker enthaltenden Regelschaltung und

Fig. 2 einen Sperrumrichter mit einer ein Referenzelement enthaltenden Regelanordnung und

Fig. 3 einen Sperrumrichter mit negativer Ausgangsspannung.

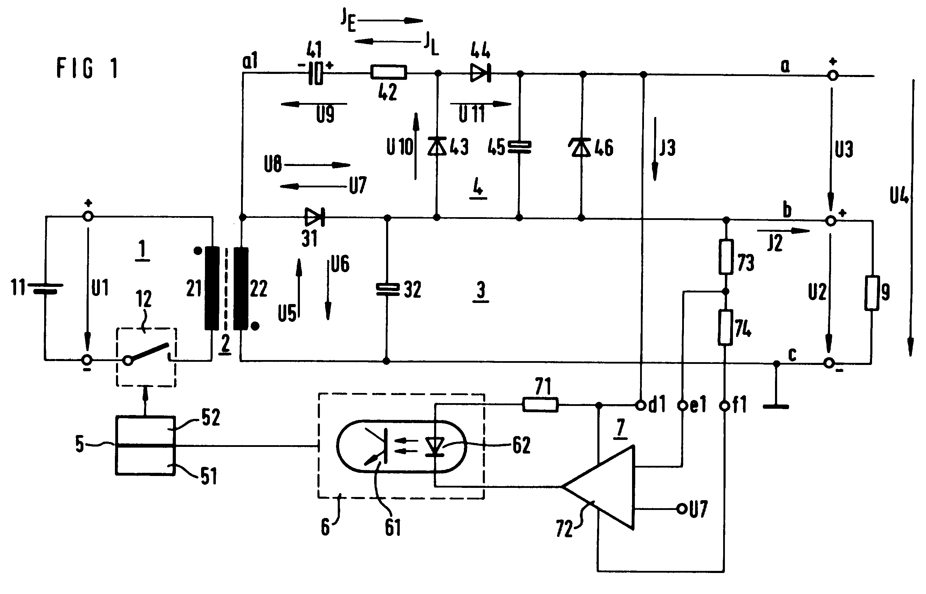

Bei der in Fig. 1 gezeigten Schaltungsanordnung liegt der elektrische Verbraucher 9 am Ausgang b, c des Sperrumrichters. Dieser Verbraucher 9 ist insbesondere ein ASIC, d.h. eine anwenderspezifische integrierte Schaltung, die eine Versorgungsspannung unterhalb von 5 V benötigt.

Der primärseitige Hauptstromkreis 1 verläuft vom Eingang für die Gleichspannung U1 der Gleichspannungsquelle 11 über die Primärwicklung 21 des Übertragers 2 und den dazu in Serie liegenden elektronischen Schalter 12.

Der sekundärseitige Hauptstromkreis 3 verläuft vom einen Ende der Sekundärwicklung 22 des Übertragers 2 über die Gleichrichterdiode 31 zum einen Ausgangsanschluß b. In einem auf die Gleichrichterdiode 31 folgenden Querzweig befindet sich der Speicherkondensator 32, an dem die Gleichspannung U2 auftritt. Das andere Ende der Sekundärwicklung 22 liegt wie der andere Ausgangsanschluß c an Bezugspotential.

Der elektronische Schalter 12 ist insbesondere ein Feldeffekttransistor als Leistungsschalter. Der elektronische Schalter 12 wird mit Hilfe der taktgesteuerten Steuervorrichtung 5 mit Hilfe von Einschaltimpulsen periodisch leitend gesteuert und bildet das Stellglied einer Regelstrecke. Der Tastgrad der Steuerspannung, die den elektronischen Schalter 12 steuert, ist auf einen vorgegebenen oberen Grenzwert begrenzt. Der obere Grenzwert des Tastgrades der Steuerspannung beträgt vorzugsweise etwa 0,5. Dabei ist unter dem Tastgrad das Verhältnis von Impulsdauer zur Perodendauer zu verstehen.

Im Hinblick auf den endlichen, nicht vernachlässigbaren Spannungsabfall an der lichtemittierenden Diode 62 des Optokopplers 6 und mit Rücksicht auf die Versorgungsspannung, die von dem durch einen Operationsverstärker gebildeten Regler 72 benötigt wird, reicht die Ausgangsspannung U2 des Sperrumrichters nicht als Hilfsspannung für die Regelanordnung 7 aus.

An die Gleichrichterdiode 31 des sekundärseitigen Hauptstromkreises 3 ist die Hilfsschaltung 4 angeschlossen. Die Hilfsschaltung 4 enthält die aus dem Kondensator 41, dem Widerstand 42 und der Diode 43 bestehende, parallel zur Diode 31 liegende Serienschaltung. In dieser Serienschaltung liegen die RC-Serienschaltung 41, 42 und die Diode 43 in Serie zueinander. Dabei sind ungleichnamige Anschlüsse der Dioden 31 und 43 miteinander verbunden. Hieraus ergibt sich, daß die Diode 43 bei leitender Diode 31 gesperrt ist.

Der Verbindungspunkt zwischen der Diode 43 und der RC-Serienschaltung 41, 42 ist über die Diode 44 und den dazu in Serie liegenden Kondensator 45 an den Verbindungspunkt der Dioden 31 und 43 geführt. Der Verbindungspunkt der beiden Dioden 31 und 43 ist mit dem Anschluß b verbunden, der sowohl Eingangs- als auch Ausgangsanschluß der Hilfsschaltung 4 ist. Die Diode 44 ist derart gepolt, daß ungleichnamige Anschlüsse der Dioden 43 und 44 miteinander verbunden sind. Hieraus ergibt sich, daß die Diode 44 sperrt, sobald die Diode 43 leitet.

Der Kondensator 45 liegt parallel zum Ausgang a2, b der Hilfsschaltung 4. Der eine Anschluß des Kondensators 45 ist mit dem gegenüber Bezugspotential die Spannung U3 führenden Anschluß b des Umrichter-Ausgangs b, c verbunden. Der andere Anschluß a2 führt gegenüber dem Anschluß b die Hilfsspannung U3 und gegenüber dem Bezugspotential am Ausgangsanschluß c des sekundärseitigen Hauptstromkreises 3 die Versorgungsspannung U4.

Parallel zum Kondensator 45 liegt die Z-Diode 46, die zusammen mit dem Widerstand 42 eine Vorrichtung zur Spannungsstabilisierung bildet und die am Kondensator 45 liegende Spannung U3 auf einen vorgegebenen Wert begrenzt.

In Fig. 1 bedeuten

U1 die Eingangsspannung des Sperrumrichters,
U2 die Gleichspannung am Ausgang b, c,
U3 die Ausgangsspannung der Hilfsschaltung 4,
U4 die Versorgungsspannung für die Regelanordnung 7,
U5 die Amplitude der an der Sekundärwicklung 22 liegenden Impulsspannung bei leitendem Schalter 12,
U6 die Amplitude der an der Sekundärwicklung 22 liegenden Impulsspannung bei gesperrtem Schalter 12,
U7 die Impulsspannung an der Gleichrichterdiode 31,
U8 die Durchlaßspannung der Gleichrichterdiode 31,
U9 die Spannung am Kondensator 41,
U10 die Spannung an dere leitenden Diode 43 und
U11 die Spannung an der leitenden Diode 44.
$I_L$ der durch den Widerstand 42 fließende Ladestrom,
IE der durch den Widerstand 42 fließende Entladestrom und
R42 der Widerstandswert des Widerstandes 42.

Die Versorgungspannung U4 wird unter Mitverwendung der zu regelnden Ausgangsspannung U2 gebildet, und zwar durch Addition der Hilfsspannung U3 zur Ausgangsspannung U2.

Der Übertrager 2 hat das Übersetzungsverhältnis

$$\ddot{u} = \frac{w2}{w1} \approx \frac{U2}{U1_{min}},$$

wobei

w1 die Windungszahl der Primärwicklung 21,
w2 die Windungszahl der Seklundärwicklung 22 und
$U1_{min}$ der Minimalwert der Eingangsspannung U1 ist.

Während der Durchlaßphase des Transistors 12 wird auf der Sekundärseite des Übertragers 2 ein Spannungsimpuls mit der Amplitude $U5 = U1 \cdot \ddot{u}$ erzeugt. Die Diode 31 verhindert, daß sich dieser Spannungsimpuls im Leistungskreis 3, d.h. im sekundärseitigen Hauptstromkreis, auswirkt. An der Diode 31 liegt dabei die Spannung U5 + U2 an.

Über die Diode 43 und den Widerstand 42 wird der Kondensator 41 durch den Ladestrom $i_L$ auf die Spannung $U9 = U5 + U2 - U10$ aufgeladen.

Bei einer Auslegung des Sperrumrichters für einen Tastgrad $\gamma \leq 0,5$ ergibt sich eine Spannung $U9 \geq 2 \cdot U2$ und $I_L \approx I_E \geq 2 \cdot I3$.

Außerdem nimmt der Speicherübertrager 2 während der Durchlaßphase des Transistors 12 entsprechend der vom Lastwiderstand 9 benötigten Ausgangsleistung Energie auf. Schaltet der Transistor 12 aus, so gibt der Speicherübertrager 2 seine Energie an den Ausgang b, c ab. Dabei fließt über die Diode 31 ein Laststrom.

An der Anode der Diode 31 liegt während der Sperrphase des Transistors 12 die Spannung U6 = U2 + U8. . Zu diesem Wert addiert sich die am Kondensator 41 liegende Spannung U9 und es fließt der Strom $I_E$ in den Kondensator 45. Dabei ist

$$I_E = \frac{U2 + U8 + U9 - (U2 + U3 + U11)}{R_{42}},$$

wobei
R42 der Widerstandswert des ohmschen Widerstandes 42 ist.

Damit ergibt sich die Hilfsspannung

$$U3 = U9 + U8 - U11 - I_E \cdot R42$$

$$= U1 \cdot \ddot{u} + U2 + U8 - U10 - U11 - I_E \cdot R42,$$

wobei $I_E$ der Entladestrom für den Kondensator 41 ist.

Die Hilfsspannung U3 ist abhängig von der Stromentnahme $I3 \approx I_E$ und der Eingangsspannung U1. Mit Hilfe der Z-Diode 46 kann die Hilfsspannung U3 nach Bedarf begrenzt werden, wobei R42 als Vorwidersand wirksam ist.

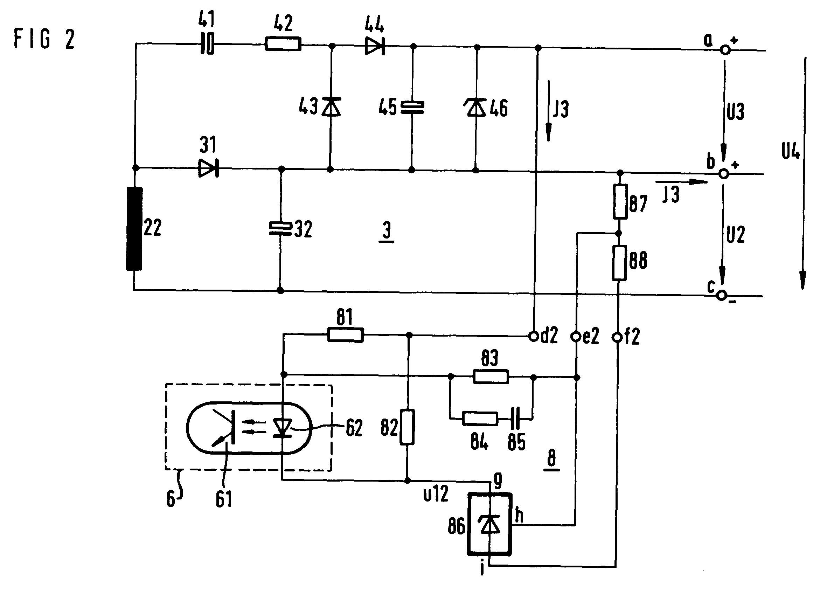

Wie Untersuchungen im Rahmen der Erfindung zeigten, läuft die Hilfsspannung U4 früher hoch als die zu regelnde Ausgangsspannung U2. Damit wird die frühzeitige Versorgung des Reglers 72 des Umrichters nach Fig. 1 oder des Referenzelements 86 des Umrichters nach Fig. 2 und der Optokopplerdiode 62 bei Beginn des Regelvorgangs, sowie eine genügende Spannungsreserve für die Regelung gewährleistet. Die Hilfsschaltung 4 ermöglicht in vorteilhafter Weise eine Regelung von kleinen Ausgangsspannungen U2 mit Hilfe einer aus einer Spannung des Ausgangskreises erzeugten Hilfsspannung bei unabhängigen und definierten Reglereigenschaften und dies mit einem vergleichsweise geringen Bedarf an Bauelementen.

Durch die Z-Diode 46 und den Widerstand 42 wird die Spannung U4 auf die Zenerspannung der Z-Diode 46 begrenzt. Die Zenerspannung ist so bemessen, daß der angeschlossene Spannungsregler vor zu hoher Betriebsspannung geschützt wird. Im Bereich kleiner bis mittlerer Eingangsspannungen führt sie vorzugsweise keinen Strom. Die Höhe der zur Ausgangspannung U2 addierten Spannung U3 entspricht etwa der Ausgangsspannung U2, d.h. es steht eine Hilfsspannung U4 zur Verfügung, die etwa gleich dem Doppelten der Ausgangsspannung U2 ist.

Am Ausgang des Sperrumrichters liegt eine Anordnung zur Istwertbildung. Diese enthält einen zwischen den Ausgangsanschlüssen b und c liegenden und aus den Widerständen 73 und 74 bestehenden Spannungsteiler. Am Abgriff des ohmschen Spannungsteilers 73, 74 wird ein Teil der Ausgangsspannung U2 abgegriffen und dem Istwerteingang el der Regelanordnung 7 zugeführt.

Die Regelanordnung 7 ist somit über den Spannungsteiler 73, 74 an den Ausgang b, c des Sperrumrichters angeschlossen.

Der Hilfsspannungseingang dl, fl der Regelanordnung 7 liegt am Ausgang a, c der aus den Ausgängen der Hilfsschaltung 4 und des sekundärseitigen Hauptstromkreises 3 gebildeten Serienschaltung.

Der Versorgungsspannungseingang des Reglers 72 ist mit dem Hilfsspannungseingang dl, fl der Regelanordnung 7 verbunden.

Der Regler 72 der Regelanordnung 7 ist mit seinem invertierenden Eingang an die Referenzspannung U7 und mit seinem nicht invertierenden Eingang an den Istwerteingang e1 angeschlossen.

Die aus der lichtemitierenden Diode 62 des Optokopplers 6 und dem Widerstand 71 bestehende Serienschaltung liegt zwischen dem Ausgang des Reglers 72 und dem Hilfsspannungseingang d1 der Regelanordnung 7.

Der in Fig. 2 gezeigte Sperrumrichter stimmt mit dem nach Fig. 1 weitgehend überein. Abweichend ist anstelle der Regelanordnung 7 die Regelanordnung 8 vorgesehen. Der Regler der Regelanordnung 8 ist durch das Referenzelement 86 gebildet.

Das Referenzelement 86 ist ein handelsüblicher integrierter Schaltkreis, z.B. vom Typ TL 431 der Fa. Motorola, und zwar ein dreipoliger integrierter Schaltkreis, der wie ein Operationsverstärker mit integrierter Referenzspannunsquelle mit einer Referenzspannung von z.B. 2,49 V hoher Stabilität funktioniert. Ein derartiger Regler weist einen Bezugsspannungsanschluß i, einen Istwerteingang h und einen Stellspannungsausgang g auf. Der Regler 86 enthält eine Referenzspannungsquelle und gibt am Stellspannungsausgang g die Stellspannung U12 ab.

Am Ausgang des sekundärseitigen Hauptstromkreises liegt der aus den Widerständen 87 und 88 bestehende Spannungsteiler. Der Verbindungspunkt der Widerstände 87 und 88 ist an den Istwerteingang e2 der Regelanordnung 8 geführt. Der Istwerteingang h des Referenzelementes 86 ist mit dem Istwerteingang e2 der Regelanordnung 8 verbunden.

Der Stellspannungsausgang g des Referenzelementes 86 ist über den Widerstand 82 an den Hilfsspannungseingang d2 der Regelanordnung 8 angeschlossen. Parallel zum Widerstand 82 liegt die aus dem Widerstand 81 und der lichtemittierenden Diode 62 des Optokopplers 6 bestehende Serienschaltung. Zwischen dem Istwerteingang e der Regelanordnung und der lichtemittierenden Diode 62 liegt der aus dem Widerstand 83 und dem dazu parallel angeordneten RC-Glied 84, 85 bestehende Zweipol.

Der Stellspannungsausgang g des Reglers 86 ist über den Optokoppler 6 an den A/D-Wandler 51 geführt, auf den der Steuerteil 52 zur Steuerung des elektrischen Schalters 12 folgt.

Die Regelanordnung 8 regelt die Ausgangsspannung U2 des Sperrumrichters so, daß die Spannung U12 gleich der internen Referenzspannung $U_{Ref}$ des Referenzelementes 86 ist.

Die Versorgungspannung des Spannungssreferenzelementes 86 ist größer als die Summe aus der Referenzspannung U12 und dem Spannungsabfall an der lichtemittierenden Diode 62 des Optokopplers 6. So kann insbesondere bei einem Referenzelement 86 mit einer Referenzspannung von 2,5 V bei einer Ausgangspannung U2 unterhalb von 5 V nicht mehr ohne eine zusätzlich erzeugte Hilfsspannung gearbeitet werden.

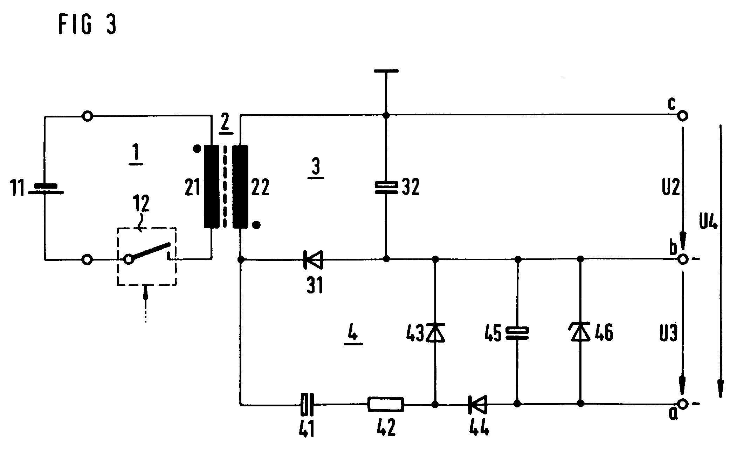

Fig. 3 zeigt eine Schaltungsanordnung mit einem Sperrumrichter, bei dem der Pluspol des Ausgangs an Bezugspotential liegt. Das Ende der Sekundärwicklung 22 ist mit dem am Bezugspotential liegenden Ausgangsanschluß c verbunden. Abweichend von den Figuren 1 und 2 ist die Gleichrichterdiode 31 des sekundärseitigen Hauptstromkreises 3 mit dem Anfang der Sekundärwicklung 22 verbunden.

Die Hilfsschaltung 4 stimmt in ihrem Aufbau mit den Hilfsschaltungen nach den Figuren 1 und 2 überein. Die Dioden 31, 43 und 44 sind wiederum mit gleicher Polung in Serie geschaltet. Abweichend von den Figuren 1 und 2 ist, daß die Gleichrichterdiode 31 des sekundärseitigen Hauptstromkreises 3 mit ihrer Kathode am Anfang der Sekundärwicklung 22 liegt. Bei dieser Anordnung ergibt sich am Ausgangsanschluß a die gegenüber dem Bezugspotential negative Hilfsspannung U4.

Die in den Figuren 1 bis 3 gezeigten Sperrumrichter sind vorzugsweise so bemessen, daß die Ausgangsspannung U2 jeweils kleiner als 5 V ist und die Hilfsspannung U4 jeweils mindestens 5 V beträgt.

Die Kapazität des Kondensators 45 ist bei den Sperrumrichtern nach den Figuren 1 bis 3 zweckmäßigerweise wesentlich kleiner als die Kapazität des Kondensators 32. Dabei ergibt sich, daß sich die Hilfsspannung U4 früher aufbaut als die zu regelnde Ausgangsspannung U2. Damit wird die frühzeitige Versorgung des Reglers 72 nach Fig. 1 oder des Referenzelements 86 und der Optokopplerdiode 62 nach Fig. 2 bei Beginn des Regelvorgangs sowie eine genügende Spannungsreserve für die Regelung gewährleistet.

Die vergleichsweise große Hilfsspannung U4 ermöglicht ferner unabhängige und definierte Reglereigenschaften.

**Patentansprüche**

1. Sperrumrichter mit einem in einem primärseitigen Hauptstromkreis (1) in Serie zu einer Primärwicklung (21) eines Übertragers (2) liegenden, mittels einer Steuervorrichung steuerbaren elektronischen Schalter (12), mit einem an eine Sekundärwicklung (22) des Übertragers (2) angeschlossenen sekundärseitigen Hauptstromkreis(3), der in einem Längszweig eine erste Diode (31) und in einem darauffolgenden, parallel zum Ausgang des Umrichters liegenden Querzweig einen Speicherkondensator (32) enthält, und mit einer an einen Ausgang (b, c) des Sperrumrichters angeschlossenen und mit einer Hilfsspannung (U4) versorgten Regelanordnung (7, 8), wobei der Tastgrad der den elektronischen Schalter (12) steuernden Steuerspannung auf einen vorgegebenen oberen Grenzwert begrenzt ist,
**dadurch gekennzeichnet,**
daß an die Gleichrichterdiode (31) des sekundärseitigen Hauptstromkreises der Eingang einer Hilfsschaltung (4) angeschlossen ist, deren Ausgang (a, b) einpolig mit deren Eingang (al, b) verbunden ist und daß die Hilfsschaltung (4) in einem eingangsseitigen Längszweig eine RC-Serienschaltung (41, 42), in einem darauffolgenden Querzweig eine zweite Diode (43), in einem auf den Querzweig folgenden Längszweig eine dritte Diode (44) und parallel zum Ausgang einen Kondensator (45) enthält und daß ein Hilfsspannungseingang (dl, fl; d2, f2) der Regelanordnung (7, 8) mit einer Hilfsspannung (U4) gespeist ist, die die Summe aus der Ausgangsspannung (U2) des Sperrumrichters und der Ausgangsspannung (U3) der Hilfsschaltung (4) ist und daß die zweite Diode (43) derart gepolt ist, daß die zweite Diode (43) bei leitender erster Diode sperrt und daß die dritte Diode (44) derart gepolt ist, daß sie bei leitender zweiter Diode (43) sperrt.

2. Schaltungsanordnung nach Anspruch 1,
**dadurch gekennzeichnet,**
daß der Grenzwert des Tastgrades wenigstens näherungsweise 0,5 beträgt.

3. Schaltungsanordnung nach Anspruch 1 oder 2,
**dadurch gekennzeichnet,**
daß parallel zum Ausgang (a, b) der Hilfsschaltung (4) eine Z-Diode (46) angeordnet ist.

4. Schaltungsanordnung nach einem der Ansprüche 1 bis 3,
**dadurch gekennzeichnet,**
daß der Versorgungsspannungseingang eines Reglers (72) der Regelanordnung (7) mit dem Hilfsspannungseingang (d1, d2) der Regelanordnung (7) verbunden ist.

5. Schaltungsanordnung nach einem der Ansprüche 1 bis 4,
**dadurch gekennzeichnet,**
die lichtemitierende Diode (82) eines Optokopplers (6) am Ausgang der Regelanordnung (7, 8) liegt und daß eine aus der lichtemittierenden Diode (62) des Optokopplers (6) und einen Widerstand (71, 81) bestehende Serienschaltung an den Hilfsspannungseingang (d) der Regelanordnung (7) angeschlossen ist.

6. Schaltungsanordnung nach einem der Ansprüche 1 bis 4,
**dadurch gekennzeichnet,**
daß der Regler durch ein Referenzelement (86) gebildet ist und daß der Stellspannungsausgang (g) des Referenzelementes (86) über einen Widerstand (82) an den Hilfsspannungseingang (d2) der Regelanordnung (8) angeschlossen ist.

7. Schaltungsanordnung nach einem der Ansprüche 1 bis 6,
**dadurch gekennzeichnet,**
daß die Ausgangsspannung des Sperrumrichters kleiner als 5 V ist und die Hilfsspannung mindestens 5 V beträgt.


**Claims**

1. Flyback converter having an electronic switch (12) which is connected in series with a primary winding (21) of a transformer (2) in a main circuit (1) on the primary side and can be controlled by a control device, having on the secondary side a main circuit (3) which is connected to a secondary winding (22) of the transformer (2), contains a first diode (31) in a series path and an energy-storage capacitor (32) in a subsequent parallel path, connected in parallel with the output in the transformer, and having a regulating arrangement (7, 8) which is connected to an output (b, c) of the flyback converter and is supplied with an auxiliary voltage (U4), the duty ratio of the control voltage which controls the electronic switch (12) being limited to a predetermined upper limit, characterized
in that the input of an auxiliary circuit (4) is connected to the rectifier diode (31) of the main circuit on the secondary side and one pole of its output (a, b) is connected to its input (al, b), and in that the auxiliary circuit (4) contains an RC series circuit (41, 42) in a series path on the input side, a second diode (43) in the downstream parallel path, a third diode (44) in a series path following the parallel path, and a capacitor (45) in parallel with the output, and in that an auxiliary voltage input (d1 f1; d2, f2) of the regulating arrangement (7, 8) is supplied with an auxiliary voltage (U4) which is the sum of the output voltage (U2) of the flyback converter and the output voltage (U3) of the auxiliary circuit (4), and in that the second diode (43) is polarized in such a manner that the second diode (43) is reverse biased when the first diode is forward biased, and in that the third diode (44) is polarized in such a manner that it is reverse biased when the second diode (43) is forward biased.

2. Circuit arrangement according to Claim 1, characterized
in that the limit of the duty ratio is at least approximately 0.5.

3. Circuit arrangement according to Claim 1 or 2, characterized
in that a zener diode (46) is arranged in parallel with the output (a, b) of the auxiliary circuit (4).

4. Circuit arrangement according to one of Claims 1 to 3,
characterized
in that the supply voltage input of a regulator (72) of the regulating arrangement (7) is connected to the auxiliary voltage input (dl, d2) of the regulating arrangement (7).

5. Circuit arrangement according to one of Claims 1 to 4,
characterized
in that the light-emitting diode (82) of an optocoupler (6) is connected to the output of the regulating arrangement (7, 8), and in that a series circuit which comprises the light-emitting diode (62) of the optocoupler (6) and a resistor (71, 81) is connected to the auxiliary voltage input (d) of the regulating arrangement (7).

6. Circuit arrangement according to one of Claims 1 to 4,
characterized
in that the regulator is formed by a reference element (86), and in that the control voltage output (g) of the reference element (86) is connected via a resistor (82) to the auxiliary voltage input (d2) of the regulating arrangement (8).

7. Circuit arrangement according to one of Claims 1 to 6,
characterized
in that the output voltage of the flyback converter is less than 5 V, and the auxiliary voltage is at least 5 V.


**Revendications**

1. Convertisseur à récupération avec un commutateur électronique (12) commandé par un dispositif de commande et monté en série avec un enroulement primaire (21) d'un transformateur (2) dans un circuit principal (1) du côté primaire, avec un circuit principal (3) du côté secondaire raccordé sur l'enroulement secondaire (22) du transformateur (2), ce circuit principal (3) comprenant, dans une branche longitudinale, une première diode (31) et, à sa suite, dans une branche transversale en parallèle sur la sortie du convertisseur, un condensateur d'accumulation (32), et avec un dispositif de régulation (7, 8) alimenté par une tension auxiliaire (U4) et raccordé sur une sortie (b, c) du convertisseur à récupération, le rapport cyclique des impulsions de la tension de commande du commutateur électronique (12) étant limité à une valeur limite maximum prédéfinie,

**caractérisé par**

le fait que l'entrée d'un circuit auxiliaire (4) est raccordé sur la diode de redressement (31) du circuit principal du côté secondaire, que sa sortie (a, b) est reliée unipolairement à son entrée (a1, b) et que le circuit auxiliaire (4) comprend, dans une branche longitudinale du côté entrée, un circuit série RC (41, 42), dans une branche transversale qui la suit, une deuxième diode (43), dans une branche longitudinale qui suit la branche transversale, une troisième diode (44) et, en parallèle sur la sortie, un condensateur (45) et qu'une entrée de tension auxiliaire (d1 f1; d2, f2) du dispositif de régulation (7, 8) est alimenté par une tension auxiliaire (U4) qui est la somme de la tension de sortie (U2) du convertisseur à récupération et de la tension de sortie (U3) du circuit auxiliaire (4) et que la deuxième diode (43) est polarisée de telle sorte que la deuxième diode (43) ferme lorsque la première diode est passante et que la troisième diode (44) est polarisée de telle sorte qu'elle ferme lorsque la deuxième diode est passante.

2. Montage conforme à la revendication 1
   **caractérisé par**
   le fait que la valeur limite du rapport cyclique des impulsions s'élève au moins approximativement à 0,5.

3. Montage conforme à la revendication 1 ou à la revendication 2
   **caractérisé par**
   le fait qu'une diode Zener (46) est placée en parallèle sur la sortie (a, b) du circuit auxiliaire (4).

4. Montage conforme à une des revendications 1 à 3
   **caractérisé par**
   le fait que l'entrée de la tension d'alimentation d'un régulateur (72) du dispositif de régulation (7) est reliée à l'entrée de tension auxiliaire (d1 d2) du dispositif de régulation (7).

5. Montage conforme à une des revendications 1 à 4
   **caractérisé par**
   le fait que la diode électroluminescente (82) d'un coupleur optoélectronique (6) se trouve à la sortie du dispositif de régulation (7, 8) et qu'un circuit en série comprenant la diode électroluminescente (62) du coupleur optoélectronique (6) et une résistance (71, 81) est raccordé à l'entrée de tension auxiliaire (d) du dispositif de régulation (7).

6. Montage conforme à une des revendications 1 à 4
   **caractérisé par**
   le fait que le régulateur est formé par un élément de référence (86) et que la sortie de tension de commande (g) de l'élément de référence (86) est raccordé, à travers une résistance (82), à l'entrée de tension auxiliaire (d2) du dispositif de régulation (8).

7. Montage conforme à une des revendications 1 à 6
   **caractérisé par**
   le fait que la tension de sortie du convertisseur à récupération est inférieure à 5 V et que la tension auxiliaire s'élève au moins à 5 V.

FIG 1

EP 0 664 602 B1

FIG 2

FIG 3

EP 0 664 602 B1